Europäisches Patentamt

European Patent Office

Office européen des brevets

(11) Publication number: **0 221 562 B1**

# EUROPEAN PATENT SPECIFICATION

(45) Date of publication of patent specification: **27.05.92**   (51) Int. Cl.⁵: **C09K 11/00**, C09K 11/08

(21) Application number: **86115417.7**

(22) Date of filing: **06.11.86**

(54) **Process for preparing a phosphor.**

(30) Priority: **07.11.85 JP 248121/85**

(43) Date of publication of application:
**13.05.87 Bulletin 87/20**

(45) Publication of the grant of the patent:
**27.05.92 Bulletin 92/22**

(84) Designated Contracting States:
**DE GB NL**

(56) References cited:
**EP-A- 0 046 945**

(73) Proprietor: **KASEI OPTONIX, LTD.**
**12-7, Shibadaimon 2-chome Minato-ku**
**Tokyo 105(JP)**

(72) Inventor: **Yaguchi, Masachika Kasei Optonix**
**Kabushiki**
**Kaisha Odawara Kojo 1060, Naruda**
**Odawara-shi Kanagawa-ken(JP)**
Inventor: **Fushiki, Takeshi Kasei Optonix**
**Kabushiki**
**Kaisha Odawara Kojo 1060, Naruda**
**Odawara-shi Kanagawa-ken(JP)**

(74) Representative: **Wächtershäuser, Günter, Dr.**
**Tal 29**
**W-8000 München 2(DE)**

Rank Xerox (UK) Business Services

**Description**

The present invention relates to a process for preparing a phosphor.

A phosphor is used, in most cases, in the form of a layer formed by agglomeration of phosphor particles having particle sizes of from a few micrometers to some tens micrometers. Therefore, a fluorescence emitted from a certain phosphor particle will collide some times against other phosphor particles before it will be discharged from the layer, and will receive irregular reflection at the surface of the layer. Thus, for instance, in the case of a phosphor layer of a cathode ray tube, as the fluorescence emitted from the inside is observed from the outside, the influence of the irregular reflection is pronounced. As a result, so-called "fogging" is likely to appear to the image, whereby the contrast will be impaired, or the irregular reflection interferes with the effective reflection in the visual direction, whereby the luminance tends to deteriorate.

Accordingly, if it is possible to form a phosphor layer composed of substantially spherical phosphor particles and not constituted by agglomerates of fine particles, the luminance will be improved, and the contrast and resolving power will remarkably be improved. Further, it will be easy to form a highly densed phosphor layer, and the quality of the layer can be improved.

Heretofore, a phosphor has been prepared by thoroughly mixing e.g. oxides containing elements for a host material and compounds containing elements for an activator, and if necessary after adding a fluxing agent thereto, sintering the mixture at a predetermined temperature.

However, according to such a conventional method, the phosphor is formed by a non-uniform reaction such as a solid-solid reaction or a solid-gas-liquid reaction, and is obliged to be fine particles having irregular shapes as mentioned above. Further, the conventional method required a high sintering temperature, and a long period of time, thus being economically disadvantageous. Besides, to obtain the product in the form of a powder, it was difficult to control the particle size distribution uniformly, and it was necessary to conduct a precise classification operation to obtain a product having a uniform particle size.

On the other hand, Japanese Unexamined Patent Publication No. 37581/1977 proposes to produce a spherical phosphor by melting a phosphor raw material and spraying the melt from nozzles. Since the phosphor raw material is required to be melted, this method requires a higher melting temperature and a longer melting time than the above-mentioned conventional method. Further, the spraying from nozzles involves a number of technical problems.

EP-A-46 945 describes a method and an apparatus for activating a fluorescent substance by treating it in a gas plasma.

It is an object of the present invention to provide a process for producing a phosphor, whereby phosphor particles having regular shapes, particularly substantially spherical shapes, may readily be obtained.

A further object of the present invention is to provide a process whereby a spherical phosphor having a uniform particle size and any desired particle size, may readily be obtained.

The present invention provides a process for preparing a phosphor which comprises heating a phosphor raw material comprising a host material and an activator, in a floating or falling state in a gaseous atmosphere at a temperature at which the activator can be activated to the host material, followed by cooling, as defined in claim 1.

Now, the present invention will be described in detail with reference to the preferred embodiments.

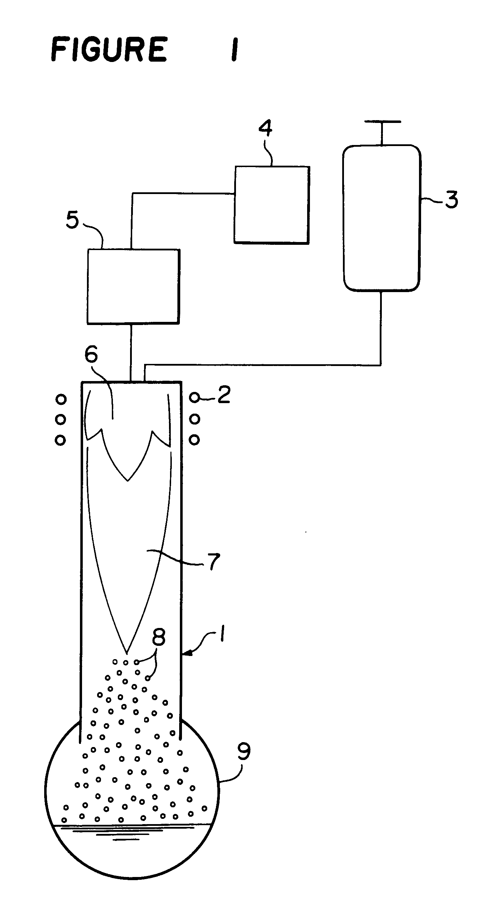

In the accompanying drawings, Figure 1 is a diagrammatic view of an embodiment of the apparatus for the preparation of a phosphor, which is useful to carry out the process of the present invention.

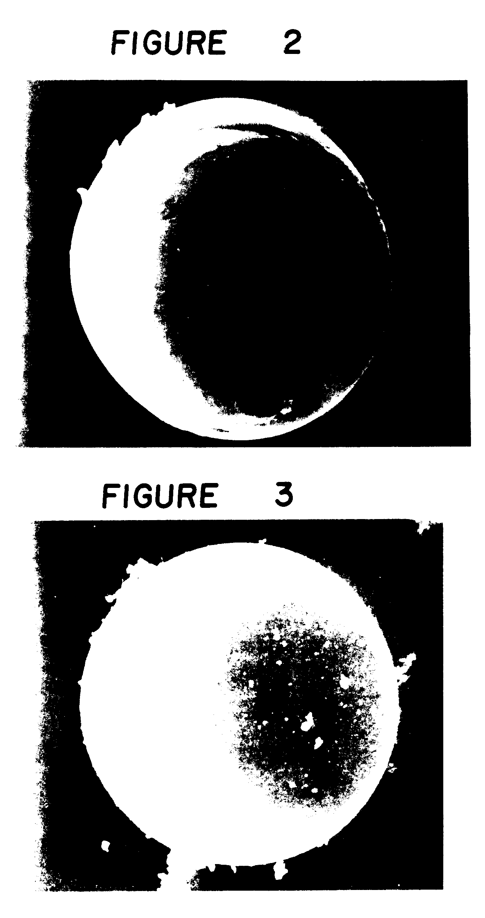

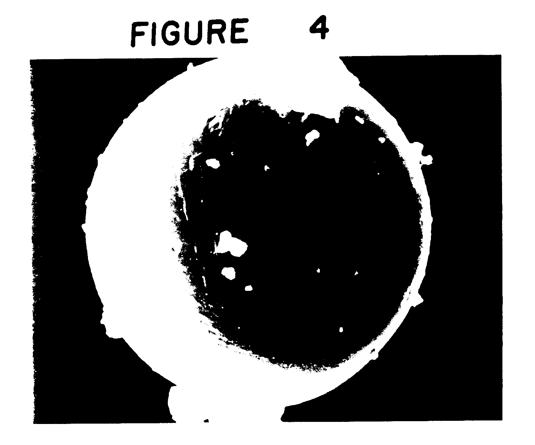

Figures 2, 3 and 4 are electron microscopic photographs showing the particle structures of the $Y_3Al_5O_{12}$:Tb phosphor, the $Zn_2SiO_4$:Mn,As phosphor and the $Y_2O_3$:Eu phosphor, respectively, prepared in Example 1 of the process of the present invention.

The phosphor raw material to be used in the present invention, is obtained in the form of e.g. powder particles or aggregates by mixing a compound (such as an oxide, a sulfide, a phosphate, a halide, an acid sulfide or a mixture thereof) containing elements for the host material as the main component of the phosphor, a compound (such as an oxide, a sulfide, a phosphate, a halide, an acid sulfide or a mixture thereof) containing elements for the activator constituting the phosphor and an additive such as a fluxing agent (flux) which may be added as the case requires, and, if necessary, molding the mixture. Such a mixture of raw materials may be preliminarily baked at a temperature at which the activator is not activated. Otherwise, a synthesized phosphor may be used as a phosphor raw material. Among such phosphor raw materials, it is preferred in the present invention to employ a phosphor raw material obtained by granulating a powdery raw material to have a composition which is the same or similar to the phosphor, if necessary, by baking. Namely, the phosphor raw material is preferably granulated with a composition which is

EP 0 221 562 B1

substantially the same as the composition of the phosphor or which, when heated, turns into the same composition as the composition of the phosphor. The granulated phosphor raw material preferably has a spherical shape, and the particle size may be suitably adjusted depending upon the particular purpose, and is usually preferred to be within a range of from 0.2 to 200µm.

The heating time is usually very short. In order to adequately activate the activator in such a short period of time, it is preferred to employ a raw material in which the host material or an ingredient of the host material is coated on its surface with the activator or a raw material for the activator. Such a raw material may be prepared, for instance, as follows.

The activator is dissolved in a solution and coated on the surface of the host material. Namely, a salt such as a halide, a sulfate, a nitrate, a phosphate or an ammonium salt, of an element to constitute the activator, is dissolved in a solvent such as water, an alcohol, a ketone or an ester, and then the solution is coated on the host material by dipping or electrostatic coating, followed by drying.

When the host material is fine particles, it may happen that such fine particles are agglomerated. In such a case, it is advisable to disperse the particles by means of a dispersant, before the coating step. As such a dispersant, it is preferred to employ an organic dispersant which will not remain after the sintering, such as ammonium polyacrylate, ammonium polycarboxylate, etc. The amount of the dispersant is preferably within a range of from 0.01 to 10% by weight relative to the host material.

Further, after drying, the coated material may be pulverized for the purpose of unbinding agglomerates. In such pulverization, the coated activator may fall off. In order to avoid such undesirable falling off, it is advisable to incorporate an organic binder such as PVA, PVP, an acrylic resin, etc. The amount of such a binder is preferably within a range of from 0.005 to 10% by weight, relative to the host material.

In another method, there may be employed, as the phosphor raw material, a coprecipitate of the host material or an ingredient of the host material with the activator or a raw material for the activator. Such a coprecipitate may be prepared by a well known method. For instance, a coprecipitate of yttrium oxide and europium may be obtained by introducing an aqueous oxalic acid solution into an aqueous solution of yttrium chloride and europium chloride and heating the mixture to a temperature of some tens degrees in centigrade.

By the preparation of the phosphor raw material as mentioned above, it is possible to obtain uniform granules having a small particle size, and the luminance of the resulting phosphor will be high. The coating method is preferred particularly for the application where the excitation is conducted by ultraviolet rays or low velocity electron beams having relatively low levels of exciting energy, since the distribution of the activator can thereby be adjusted in the direction of the depth of each phosphor particle.

In the present invention, conventional plasma heating means may be employed as the heat source for heating the phosphor raw material thus prepared, in a floating or falling state in a gaseous atmosphere. With the high temperature plasma it is possible to obtain a phosphor having high luminance and high light transmitting properties.

In order to prepare a phosphor in a short period of time according to the process of the present invention, it is necessary to have a super high temperature atmosphere. In general, the oxyhydrogen flame is said to have a limit of 2500°C at the maximum, and, for example, in the case of a high temperature sintering phosphor, it is necessary to use a considerable amount of a flux. In such a case, the amount of the flux is required to be 80% by weight at the maximum and 10% by weight at the minimum, relative to the weight of the host material of the phosphor.

Whereas, the temperature accomplished by the high temperature plasma is said to be several tens thousands degrees in centigrade, and the reaction of the host material and the activator can be completed without using any flux, whereby a high purity phosphor can be prepared without requiring a purification step such as washing after the synthesis of the phosphor.

As a means for generating such a high temperature plasma, it is preferred to employ a plasma apparatus of an induction heating system. The electrode and the phosphor raw material may be separated, and a contamination can be prevented by disposing a high frequency induction coil around the container or tube wherein the phosphor raw material is permitted to float or fall. As the gas for the formation of a plasma, oxygen, nitrogen, argon, carbon dioxide, or a gas mixture of two or more such gases, may be employed. It is preferred to select a suitable gas depending upon the type of the phosphor to be prepared.

The phosphor raw material to be heated, is required to be supplied adequately free from agglomeration. To avoid agglomeration, there may be employed a method wherein the raw material is passed through a vibrating sieve. However, for assuarance, it is preferred to impart the same electric charge to the phosphor raw material so that charged particles are separated from one another.

There may be employed an apparatus as shown in Figure 1 to carry out the process of the present invention.

3

The apparatus shown in Figure 1 has a reaction tube 1 adapted to heat the phosphor raw material in a falling state. At an upper portion of this tube, a high frequency induction coil 2 is wound to generate a high temperature plasma. The top of the reaction tube 1 is connected to a container 3 as the source for supplying a plasma-forming gas. A phosphor raw material electrically charged, is supplied via an electrostatic high voltage generator 5 from a raw material charge tank 4, simultaneously with the gas. The phosphor raw material 8 heated by the high temperature plasma (as shown by a plasma arc 6 and a plasma flame 7 in the Figure) in the reaction tube 1, falls into a cyclone 9 connected to the lower portion of the reaction tube 1 and is cooled and recovered. As an apparatus for electrically charging the phosphor raw material and jetting the charged material, an electrostatic coating apparatus such as Stajet or Stafluid (Sames Co., France), REP gun (Runsberg Co., U.S.A) Iwata Electrostatic Powder Coating Machine or Gema Float Electrostatic Coating Machine (Gema Co., Switzerland), may be employed.

The injection of the phosphor raw material or phosphor into the plasma may be conducted by an optional method. However, the position for the introduction is determined depending upon the melting point and the properties of the raw material, for example, at the top of the plasma flame, at the side of the flame or at the lower portion of the flame (or forcibly into the interior of the flame).

Further, it may be required to control the atmosphere during the reaction, for instance, in the case where the desired phosphor is a sulfide. In such a case, an atmosphere-forming gas such as carbon disulfide or hydrogen oxide is incorporated into a carrier gas which is an inert gas.

The following phosphors may be obtained as spherical transparent phosphors according to the process of the present invention. For instance, blue emitting phosphors include silver-activated zinc sulfide (ZnS:Ag), silver and aluminum-activated zinc sulfide (ZnS:Ag,Al,Cl), cerium-activated yttrium silicate ($Y_2SiO_5$:Ce), europium-activated barium-magnesium aluminate [$(Ba,Mg)O_2$-$6Al_2O_3$:$Eu^{2+}$], cerium-activated calcium-magnesium silicate ($Ca_2MgSiO_5$:Ce), silver-activated zinc sulfoselenide [$Zn,(S,Se)$:Ag], silver and aluminum-activated zinc sulfoselenide [$Zn(S,Se)$:Ag,Al], cerium-activated strontium-gallium sulfide ($SrGa_2S_4$:Ce), titanium-activated calcium-magnesium silicate [$(Ca, Mg)_2SiO_4$:Ti], terbium-activated yttrium oxysulfide ($Y_2O_2S$:Tb), terbium-activated gadolinium oxysulfide ($Gd_2O_2S$:Tb), europium-activated strontium-barium phosphate [$(Sr,Ba)_3(PO_4)_2$:$Eu^{2+}$] and europium-activated calcium chloroborate ($Ca_2B_5O_9Cl$:$Eu^{2+}$), self-activated calcium tungstate ($CaWO_4$), BFC and BFB. Likewise, green emitting phosphors include manganese and arsenic-activated zinc silicate ($Zn_2SiO_4$:Mn,As), copper-activated zinc-cadmium sulfide [$(Zn_{1-c},Cd_c)S$:Cu, provided $0 \leq c \leq 0.1$, the applies hereinafter], silver-activated zinc-cadmium sulfide [$(Zn_{1-d},Cd_d)S$:Ag, provided $0.3 \leq d \leq 0.5$, th applies hereinafter], silver and aluminum-activated zinc-cadmium sulfide [$(Zn_{1-e},Cd_e)S$:Ag,Al, provided $0.3 \leq e \leq 0.5$, the same applies hereinafter], and terbium-activated rare earth metal sulfide [$Ln_2O_2S$:Tb, provided Ln is at least one element selected from the group consisting of Y, Gd, Lu and La, the same applies hereinafter, and the above-mentioned $(La_{1-x},Y_x)_2O_2S$:Tb phosphor is included in this phosphor]. Likewise, red emitting phosphors include an europium-activated rare earth metal oxysulfide ($Ln_2O_2S$:Tb, provided Ln is at least one element selected from the group consisting of Y, Gd, Lu and La, the same applies hereinafter, and the above $Y_2O_2S$:Eu phosphor is included in this phosphor), an europium-activated rare earth metal oxide ($Ln_2O_3$:Eu, provided Ln is as defined above, the same applies hereinafter, and the above $Y_2O_3$:Eu phosphor is included in this phosphor, an europium-activated rare earth metal vanadate ($LnVO_4$:Eu, provided Ln is as defined above, the same applies hereinafter, and the above $YVO_4$:Eu phosphor is included in this phosphor), an europium-activated rare earth metal borate ($LnBO_3$:Eu, provided Ln is as defined above, and the same applies hereinafter), an europium-activated rare earth phosphate ($LnPO_4$:Eu, provided Ln is as defined above, and the same applies hereinafter), silver-activated zinc cadmium sulfide [$Zn_{1-f},Cd_f)S$:Ag, provided f is $0.05 \leq f \leq 0.9$, and the same applies hereinafter], manganese-activated zinc phosphate [$Zn_3(PO_4)$:Mn] and manganese-activated cadmium borate ($Cd_2B_2O_5$:Mn).

As described above, the present invention may be practically applied to any conventional phosphor. However, it is readily applicable particularly to an oxide-type phosphor such as an oxide phosphor, a silicate phosphor, a phosphate phosphor, a borate phosphor, an aluminate phosphor or an oxysulfide phosphor.

The size of the phosphor to be obtained, is determined by the amount of introduction, the speed and the position for introduction of the raw material supplied, and the size of the plasma. The particle size usually desired for the phosphor, can readily be obtained, and the particle size distribution of the phosphor to be obtained, can be made very narrow.

Further, generally, a high luminance is obtainable in the case of the luminance emitted by UV as compared with the luminance emitted by electron beams, although the luminance is also dependent on the conditions for synthesis. Accordingly, the phosphor of the present invention is highly practically useful as a phosphor for lamps and as a phosphor for a low velocity beam.

Now, the present invention will be described in further detail with reference to Examples. However, it should be understood that the present invention is by no means restricted to these specific Examples.

EXAMPLE 1

Various phosphors were prepared by the apparatus for the production of phosphors, as shown in Figure 1.

The electrostatic high voltage generator used, was adjusted to a voltage of -7 kV. Nitrogen was used as the carrier gas, and the nitrogen pressure was adjusted to 3 kg/cm$^2$. The discharge rate of the phosphor was adjusted to 100 g/min. A high frequency plasma torch Model 56 manufactured by Tafa Company, was used. Nitrogen gas was used as the gas for the generation of a plasma. The power of 200 kW was required for the generation of the plasma.

The respective phosphors were prepared from the following raw materials, respectively. Namely, $Y_3Al_5O_{12}$:Tb was prepared from a raw material obtained by thoroughly mixing 3 mols of yttrium oxide, 5 mols of alumina and 0.001 mol of terbium oxide; manganese and arsenic-activated zinc silicate ($Zn_2SiO_4$:Mn,As) was prepared from a raw material obtained by mixing 2 mols of zinc oxide, 1 mol of silicic acid, 0.0003 mol of manganese fluoride and 0.0001 mol of arsenic trioxide; europium-activated yttrium oxide ($Y_2O_3$:Eu) was prepared from a raw material obtained by mixing 1 mol of yttrium oxide and 0.05 mol of europium oxide; (Zn,Cd)S:Cu,Al was prepared by using the phosphor of 10$\mu$m prepared by a usual method, as the raw material; $Y_3Al_5O_{12}$:Tb was prepared by using the phosphor of 7$\mu$m prepared by a usual method, as the raw material; $Zn_2SiO_4$:Mn,As was prepared by using the phosphor of 8 $\mu$m prepared by a usual method, as the raw material; $Y_2O_3$:Eu was prepared by using the phosphor of 10 $\mu$m prepared by a usual method, as the raw material; and $Y_2O_2$S:Eu was prepared by using the phosphor of 8 $\mu$m prepared by a usual method, as the raw material. The shape, the UV emission, the transparency, etc. of each phosphor thus obtained are shown in Table 1.

Table 1

| Type of the phosphor | Shape/ shape factor | Particle size | Standard deviation of the particle size distribution | UV emission (Black light) | Transparency |
|---|---|---|---|---|---|
| $Y_3Al_5O_{12}$:Tb | Sphere/1-1.1 | 150 μm | 0.2 | Green | Glassy transparency |
| $Zn_2SiO_4$:Mn,As | Sphere/1-1.05 | 50 μm | 0.25 | Green | Glassy transparency |
| $Y_2O_3$:Eu | Sphere/1-1.1 | 120 μm | 0.25 | Red | Glassy transparency |
| (Zn,Cd)S:Cu,Al | Sphere/1-1.2 | 30 μm | 0.3 | Green | Glassy transparency |
| $Y_3Al_5O_{12}$:Tb | Sphere/1-1.1 | 50 μm | 0.2 | Green | Glassy transparency |
| $Zn_2SiO_4$:Mn,As | Sphere/1-1.1 | 75 μm | 0.3 | Green | Glassy transparency |
| $Y_2O_3$:Eu | Sphere/1-1.1 | 60 μm | 0.2 | Red | Glassy transparency |
| $Y_2O_3S$:Eu | Sphere/1-1.1 | 40 μm | 0.3 | Red | Glassy transparency |

The shape factor is a ratio of the maximum diameter to the minimum diameter of each phosphor particle. The closer the value of the shape factor to 1 is, the closer the shape of the particle to the true sphere becomes.

In about 5 to about 10 seconds after the introduction of the raw material, each phosphor was collected in the cyclone disposed at the lower portion of the apparatus.

Figures 2, 3 and 4 are electron microscopic photographs (1,000 magnifications) showing the particle structures of the $Y_4Al_5O_{12}$:Tb phosphor, the $Zn_2SiO_4$:Mn,As phosphor and the $Y_2O_3$:Eu phosphor thus obtained, respectively.

## EXAMPLE 2

To the raw material in Example 1, the following compound was added as a flux and thoroughly mixed, and a phosphor was prepared from the mixture.

Namely, 1 mol of barium chloride was added to $Y_3Al_5O_{12}$:Tb; 0.01 mol of antimony oxide was added to $Zn_2SiO_4$:Mn,As; and 0.1 mol of lithium phosphate was added to $Y_2O_3$:Eu, whereby the same phosphors as in Example 1 were obtained, respectively. In this case, the obtained phosphors were thoroughly washed with pure water and dried.

## EXAMPLE 3

By using the same plasma-generating apparatus as used in Example 1, as a heating means, phosphors were prepared from the following raw materials.

Namely, $Y_3Al_5O_{12}$:Tb was prepared from a raw material obtained by dissolving 0.002 mol of terbium chloride in 1,000 ml of deionized water, dispersing 3 mols of yttrium oxide and 5 mols of alumina thereinto, further adding 0.5% by weight, relative to the solid content, of a 40 vol % ammonium polyacrylate solution as a dispersant, and 0.01% by weight, relative to the solid content, of a 10% PVA solution, thoroughly mixing the mixture, then evaporating the mixture to dryness, and sieving the dried material to obtain a raw material of 500 mesh pass.

Likewise, manganese and arsenic-activated zinc silicate ($Zn_2SiO_4$:Mn,As) was prepared from a raw material obtained by dissolving 0.003 mol of manganese chloride in 500 ml of ethyl alcohol, adding 2 mols of zinc oxide, 1 mol of silicic acid and 0.0001 mol of arsenic trioxide thereto, further adding 0.8% by weight of the above-mentioned ammonium polyacrylate solution as a dispersant, thoroughly mixing the mixture, then evaporating the mixture to dryness, and sieving the dried material to obtain a raw material of 500 mesh pass.

Europium-activated yttrium oxide ($Y_2O_3$:Eu) was prepared from a raw material obtained by dissolving 0.1 mol of europium nitrate in 100 ml of methyl alcohol, mixing the solution with 1 mol of yttrium oxide to obtain a non-sticky raw material, then drying and sieving the material to obtain a raw material of 500 mesh pass.

The shape, the UV emission, the transparency, etc. of the phosphors thus obtained, are shown in Table 2.

Table 2

| Type of the phosphor | Shape/ shape factor | Particle size | Standard deviation of the particle size distribution | UV emission (Black light) | Transparency |
|---|---|---|---|---|---|
| $Y_3Al_5O_{12}$:Tb | Sphere/1-1.1 | 10 μm | 0.2 | Green | Glassy transparency |
| $Zn_2SiO_4$:Mn,As | Sphere/1-1.05 | 5 μm | 0.25 | Green | Glassy transparency |
| $Y_2O_3$:Eu | Sphere/1-1.1 | 5 μm | 0.25 | Red | Glassy transparency |

EXAMPLE 4

An aqueous solution of 0.6 mol of oxalic acid was mixed with an aqueous solution containing 0.05 mol of europium chloride and 1 mol of yttrium chloride, and the mixture was heated to 50°C to obtain a coprecipitate. By using the coprecipitate, a phosphor was prepared in the same manner as in Example 3.

This europium-activated yttrium oxide ($Y_2O_3$:Eu) was transparent and spherical like the one obtained in Example 3.

According to the present invention, it is possible to obtain a phosphor having a regular shape, particularly a phosphor having a substantially spherical shape and having a uniform particle size. With such a regular shape, it is possible to obtain excellent luminance and contrast when the phosphor is used as a phosphor layer.

**Claims**

1. A process for preparing a phosphor which comprises treating a phosphor raw material comprising a host material and an activator, in a floating or falling state in a gaseous atmosphere at a temperature at which the activator can be activated to the host material, followed by cooling, wherein said heating is conducted in a high temperature plasma at a temperature at which the surface of the granulated phosphor raw material melts.

2. The process according to Claim 1, wherein the phosphor raw material is granulated with a composition which is substantially the same as the composition of the phosphor or which, when heated, turns into the same composition as the composition of the phosphor.

3. The process according to Claim 1, wherein the phosphor raw material contains a raw material in which the host material or an ingredient of the host material is coated on its surface with the activator or a raw material for the activator.

4. The process according to Claim 1, wherein the phosphor raw material contains a coprecipitate of the host material or an ingredient of the host material with the activator or a raw material for the activator.

5. The process according to Claim 2, wherein the granulated phosphor raw material has a particle size of from 0.2 to 200 $\mu$m.

6. The process according to Claim 2, wherein the granulated phosphor raw material is electrically charged with the same electrical charge prior to the heating in the gaseous atmosphere.

7. The process according to Claim 2, wherein the phosphor is an oxide-type phosphor.

8. The process according to Claim 1, wherein the phosphor raw material is composed of a phosphor.

**Revendications**

1. Procédé de préparation d'une matière luminescente, qui comprend le traitement d'une matière première luminescente comprenant une matière hôte et un activateur, à l'état flottant ou tombant dans une atmosphère gazeuse à une température à laquelle l'activateur peut être activé vis-à-vis de la matière hôte, en faisant suivre par un refroidissement, dans lequel ledit chauffage est conduit dans un plasma à température élevée, à une température à laquelle la surface de la matière première luminescente granulée fond.

2. Procédé selon la revendication 1, dans lequel la matière première luminescente est granulée avec une composition qui est sensiblement la même que la composition de la matière luminescente ou qui, une fois chauffée, se transforme en la même composition que la composition de la matière luminescente.

3. Procédé selon la revendication 1, dans lequel la matière première luminescente contient une matière première dans laquelle la matière hôte ou un ingrédient de la matière hôte est revêtu sur sa surface par l'activateur ou une matière première pour l'activateur.

4. Procédé selon la revendication 1, dans lequel la matière première luminescente contient un coprécipité de la matière hôte ou d'un ingrédient de la matière hôte avec l'activateur ou une matière première pour l'activateur.

5. Procédé selon la revendication 2, dans lequel la matière première luminescente granulée a une dimension de particule de 0,2 à 200 μm.

6. Procédé selon la revendication 2, dans lequel la matière première luminescente granulée est électriquement chargée par la même charge électrique que celle avant le chauffage dans l'atmosphère gazeuse.

7. Procédé selon la revendication 2, dans lequel la matière luminescente est une matière luminescente de type oxyde.

8. Procédé selon la revendication 1, dans lequel la matière première luminescente est constituée d'une matière luminescente.

**Patentansprüche**

1. Verfahren zur Herstellung eines Phosphors, umfassend die Behandlung eines Phosphor-Rohmaterial, das ein Wirtsmaterial und einen Aktivator umfaßt, in einem fließenden oder fallenden Zustand in einer gasförmigen Atmosphäre bei einer Temperatur, bei der der Aktivator gegenüber dem Wirtsmaterial aktiviert werden kann, gefolgt von Abkühlung, wobei das Erhitzen durchgeführt wird in einem Hochtemperaturplasma bei einer Temperatur, bei der die Oberflache des granulierten Phospor-Rohmaterials schmilzt.

2. Verfahren gemäß Anspruch 1, wobei das Phosphor-Rohmaterial granuliert ist und eine Zusammensetzung aufweist, welche im wesentlichen die gleiche ist wie die Zusammensetzung des Phosphors oder welche sich beim Erhitzen in die gleiche Zusammensetzung wie die Zusammensetzung des Phosphors umwandelt.

3. Verfahren gemäß Anspruch 1, wobei das Phosphor-Rohmaterial ein Rohmaterial enthält, in dem das Wirtsmaterial oder ein Bestandteil des Wirtsmaterials an seiner Oberfläche mit dem Aktivator oder einem Rohmaterial für den Aktivator beschichtet ist.

4. Verfahren gemäß Anspruch 1, wobei das Phosphor-Rohmaterial ein Co-Präzipitat von dem Wirtsmaterial oder einem Bestandteil des Wirtsmaterials mit dem Aktivator oder einem Rohmaterial für den Aktivator enthält.

5. Verfahren gemäß Anspruch 2, wobei das granulierte Phosphor-Rohmaterial eine Teilchengröße von 0,2 bis 200 μm hat.

6. Verfahren gemäß Anspruch 2, wobei das granulierte Phosphor-Rohmaterial vor dem Erhitzen in der gasförmigen Atmosphäre elektrisch aufgeladen wird mit der gleichen elektrischen Ladung.

7. Verfahren gemäß Anspruch 2, wobei der Phosphor ein Phosphor vom Oxid-Typ ist.

8. Verfahren gemäß Anspruch 1, wobei das Phosphor-Rohmaterial aus einem Phosphor zusammengesetzt ist.

# FIGURE   I

FIGURE 2

FIGURE 3

FIGURE 4